# EUROPEAN PATENT SPECIFICATION

(11) **EP 4 277 796 B1**
(45) Date of publication and mention of the grant of the patent: **25.03.2026**
(21) Application number: 22700349.8
(22) Date of filing: 13.01.2022
(51) Int. Cl.: B41M 1/04, B41F 5/24, B41F 31/00, B41M 1/14, B41M 1/18, B41F 35/04, B41N 7/06, C09D 11/00, B41F 17/22, B41F 27/10, B41F 31/04, C09D 11/101, C09D 11/40

(54) **METHOD FOR APPLYING AN IMAGE BUILT UP OF MULTIPLE INK LAYERS ON A FACE OF A CONTAINER, INK SET FOR SAID METHOD AND FLEXOGRAPHIC TRANSFER PRINTING SYSTEM FOR SAID METHOD**
VERFAHREN ZUM AUFBRINGEN EINES AUS MEHREREN FARBSCHICHTEN AUFGEBAUTEN BILDES AUF EINE FLÄCHE EINES BEHÄLTERS, TINTENSATZ HIERFÜR UND FLEXOGRAPHISCHES TRANSFERDRUCKSYSTEM HIERFÜR
PROCÉDÉ D'APPLICATION D'UNE IMAGE CONSTITUÉE DE MULTIPLES COUCHES D'ENCRE SUR UNE FACE D'UN RÉCIPIENT, JEU D'ENCRES POUR LEDIT PROCÉDÉ ET SYSTÈME D'IMPRESSION PAR TRANSFERT FLEXOGRAPHIQUE POUR LEDIT PROCÉDÉ

(30) Priority: 15.01.2021 NL 2027326
(43) Date of publication of application: 22.11.2023
(73) Proprietor: Van Dam International Holding B.V., 1033 RH Amsterdam (NL)
(72) Inventor: TESSELS, Wouter Rudolf, 1033 RH Amsterdam (NL); RÖMER, Marco, 1033 RH Amsterdam (NL); SCHOONBERGEN, Frederik, 1033 RH Amsterdam (NL)
(74) Representative: V.O.
(86) International application number: PCT/NL2022/050009
(87) International publication number: WO 2022/154659

(56) References cited:
- WO-A1-2010/127419
- WO-A1-2010/127419
- US-B2- 9 365 064
- US-B2- 9 365 064

## Description

The invention relates to a method for applying an image built up of multiple ink layers on a face of a container, a set of inks and a flexographic transfer printing system.

Flexographic printing is a printing process wherein a resilient printing plate is wrapped around a plate cylinder. An image raises from the surface of the printing plate, which is also known as a cliché. Ink is applied to the raised surface via an anilox roll, to which ink is applied in a wetting window of a doctor chamber. Conventionally, the inked raised surface is brought into direct contact with the substrate to be printed, e.g. a foil. In flexographic transfer printing, which is the subject of the present invention, the inked raised surface is brought into contact with a printing blanket and from there transferred onto a substrate, such as a face of a container.

WO2010/127419A1 discloses a method for pasty ink flexography printing associated to ink load variation due to thermal modulation to allow a printing technology in central drum flexography equipment's with high viscosity inks and 100% solids with later UV radiation (UV) or electron beam (EB) curing. A central drum flexographic printing system is provided which by means of modifications in the inking systems allows applying high viscosity inks with no intermediate drying or curing system between the successive appliance of several colors having only the final drying with a curing device.

US9365064B2 discloses methods and apparatus for flexographic colour printing, and more particularly for implementing "wet trapping" in flexographic printing using energy curable flexographic liquid inks. Radiation curable inks can be formulated that wet trap over each other without back-trapping onto the plates and anilox units of down-line printing units by controlling the storage modulus of the ink/coating. The storage modulus G' in the inks can be controlled to ensure that the highest G' ink is printed first with successive colours being trapped in the order of their declining G' values. An image in wet ink can thus be trapped over a different image in wet ink of a different colour without picking the previously printed ink back up and redepositing it onto the subsequent plates and rolls in the printing press (back-trapping).

In US9365064B2, wet trapping has also been proposed in flexographic printing based on the recognition that when depositing superposed multiple layers of ink, mixing will not occur if each layer is deposited over a layer having a higher viscosity than the newly deposited layer. However, it is found that with the range of viscosities available for flexographic printing inks, it is impossible to use wet trapping based on viscosities with a particular number of colours, since at some point a lower viscosity limit is reached.

However, now, a range of ink viscosities is developed which allows wet trapping of UV curable process colour inks provided as primary colours of a CMYK colour system. As such, a method is now provided for applying an image, in particular a colour image, built up of multiple ink layers on a face of a container, in particular a cup. The method in accordance with claim 1 comprises building up the image by sequential deposition of layers of UV curable process colour inks onto a blanket, wet-trapping ink of subsequently deposited UV curable process colour ink layers on previously deposited UV curable process colour ink layers, transferring the image to the container by a making contact between a face of the container and the blanket, and UV curing the UV curable process colour inks of the image on the container.

The deposition of the layers of UV curable process colour ink includes for each layer the steps of applying UV curable ink of a process colour to ink wells in a mantle surface of an anilox roll by rotating the mantle surface along a wetting window of a doctor chamber containing the UV curable process colour ink, transferring UV curable process colour ink from the ink wells in the mantle surface of the anilox roll to a flexographic printing plate carried on a mantle surface of a plate cylinder by contact between the mantle surface of the anilox roll and the printing plate, and transferring UV curable process colour ink from the printing plate onto a blanket carried on a mantle of an printing cylinder.

At least some of the UV curable process colour inks are provided as primary colours of a CMYK colour system, the UV curable process colour inks having mutually different viscosity, for example in substantially non-overlapping viscosity ranges, for example for typical printing temperatures for example between 10-50 degrees C, between 20-40 degrees C, or more particular around 25 degrees C, at typical strain rates for example between 6 and 130 s⁻¹ which may for example correspond to a printing speed between 100-600 containers per minute, or in particular approximately 400 containers per minute.

For obtaining UV curable process colour ink of a particular viscosity or within a particular viscosity range, ink typically used for flexographic printing may be mixed with ink typically used for dry-offset printing with the same colour or at least substantially the same colour. With different mixing ratios, the desired viscosity may be obtained. For example, the ink typically used for dry-offset printing may have a higher viscosity.

The UV curable process colour inks are applied to the blanket in an order of decreasing viscosity.

During the printing process, ink may be subjected to different strain rates before being cured. When the ink is transferred from the anilox roll to the flexographic printing plate, and when the ink is transferred from this printing plate to the blanket, the ink may be subjected to relatively high strain rates. When the ink is present on the blanket and/or the printing plate and not being transferred, the ink may be subjected to relatively low strain rates.

Hence, to prevent undesired mixing of different layers of ink during the entire printing process, it may be preferred that the UV curable process colour inks have a different viscosity in substantially non-overlapping viscosity ranges at relatively high strain rates as well as at relatively low strain rates, for example respectively while being transferred from their respective anilox roll to their respective printing plate, as well as after being deposited on the blanket and prior to being transferred to the container.

Compared to conventional UV curable inks for flexographic printing, the viscosity of at least some of the UV curable inks of the process colours, preferably all, in the ink set is increased. Preferably, the increase is only to a limited extent. The viscosity of the UV curable ink in the process colours may e.g. range from 1.7 - 5.0 Pa.s at 20° or 0.3 - 1.6 Pa.s at 40° C for strain rates between approximately 6 and 130 s⁻¹. Particularly, it is preferred if the viscosity of the UV curable ink of the process colours in the ink set are included in a range from 1-4 Pa.s. at 20°, i.e. from about 10-40 Ps at 20°C.

The UV curable process colour may be provided as or may include primary colours of a CMYK colour system or extended gamut CMYKOGB/V colour system. CMYK is an abbreviation for the colours cyan, magenta, yellow, key (black). CMYKOGV is an abbreviation for the colours cyan, magenta, yellow, key (black), orange, green and violet, and CMYKOGB is an abbreviation for the colours cyan, yellow, magenta, key (black), orange, green and blue. Where the colour of an ink in mentioned, this colour may be a standard colour according to the Pantone Matching System. The sequence in which these colours are applied to the printing blanket may be varied.

Surprisingly, in a wet trapping process as is the subject of the present invention, inks may be applied to the blanket in order or increasing opacity. This way, the lighter colour inks may be made to include a relatively high amount of non-transparent pigment, but the resulting increase in opacity can be accommodated for. In particular, the lighter coloured, more opaque inks are then positioned more towards the bottom of the substrate (i.e. the surface of a container to be printed), with the darker coloured, more transparent inks superimposed thereon. Relatively opaque light coloured inks can thus be used in the colour system without blocking relatively transparent, darker other colours.

Particularly good quality images may be obtained if the colour black (K) is applied to the blanket first, and the colour Yellow (Y) is applied to the blanket last, in particular with the yellow ink being more opaque than the black ink. It is preferred that the colours are applied to the blanket dark to light, in a sequence of colour intensity between subsequent inks that is continuously decreasing or generally decreasing. In the latter situation, the colour intensity of subsequently applied inks may within the ink set be of either decreased of increased colour intensity. The ink that is applied last may then still be of decreased intensity - e.g. lighter - relative to the ink that is applied first. This facilitates providing the subsequent inks as inks that each have mutually different viscosities. Subsequent inks may then be of increasing opacity. In particular, the ink that is applied first may be more transparent than the ink that is applied last.

The UV curable process colour inks are preferably applied in a sequence of KMCY or KCMY in decreasing viscosity, preferably stepwise decreasing viscosity. Other colour inks may optionally be included in this sequence.

In an extended gamut colour system, the order of application to the printing blanket may be KGVMCOY or KGBMCOY, or optionally KGVCMOY or KGBCMOY. Depending on the colours in the image that is printed, layers of one or more inks may be omitted if said ink is not required for forming the image with the desired colours. The sequence of colours may thus at least partially not be from dark to light.

Within the sequence of primary process colours of the ink set claimed, one or more non-primary colour inks may be present in the ink set. Such non-primary colour ink is preferably of non-overlapping viscosity with the other inks in the ink set, and is preferably provided such that the ink set has a decreasing viscosity from dark to light.

In some printing applications, e.g. for printing photo quality prints, the colour yellow (Y) may be closest to the substrate, i.e. the surface of a cup to be printed, and the colour black (K) may be on top. As seen from the substrate the colour sequence may advantageously be light to dark, e.g. yellow, cyan, magenta, black or yellow, magenta, cyan, black for CMYK systems. For extended gamut CMYKOGV/B systems this may be yellow, orange, cyan, magenta, violet/blue, green, black or yellow, orange, magenta, cyan, violet/blue, green, black as seen from the substrate, e.g. as seen from the surface of a cup to be printed. The ink of one or more lighter colours may in such applications be more opaque than the ink of one or more darker colours. In particular, the yellow and/ or orange ink in may be more opaque than the green and/or black ink.

On the printing machine the inks are then applied to the blanket dark to light, i.e. black, cyan, magenta, yellow or black, magenta, cyan, yellow for CMYK. For extended gamut, this may be black, green, violet/blue, cyan, green, magenta, orange, yellow.

On the printing machine, the colour heads with the darker colours have the lower numbers in the order in which they apply ink to the blanket, and the lighter colours the higher numbers. Black may e.g. be colour head number 1, green colour head number 2, violet/blue colour head number 3, magenta colour head number 4, cyan colour head number 5, orange colour head number 6, and yellow colour head number 7. Magenta and cyan may relatively easily be switched in order.

The relatively dark coloured inks in the ink set are then provided with a higher viscosity then the light coloured inks of the ink set, e.g. the black ink being about 1 Pa.s. at 20°, and the viscosities of the violet/blue, cyan, green, magenta, orange and yellow inks being of stepwise increasing viscosities with the Yellow ink being about 4 Pa.s. at 20°. Lighter inks are then thus more opaque and less viscous than the darker inks, and are applied onto the blanket after more viscous, more transparent darker inks. After transfer from the blanket to the substrate the order of the ink layers is reversed, and lighter inks in the image are closer to the surface of the substrate than the darker inks. A container with an image printed in accordance with the above advantageous embodiment of the invention may thus be identified by having an image on its surface that comprises wet trapped ink layers in a colour sequence as seen from the surface that is light to dark. e.g. yellow, magenta, cyan, black for CMYK. For extended gamut this may be yellow, orange, cyan, magenta, violet/blue, green, black as seen from the substrate, e.g. the surface of a cup to be printed. As seen from the surface, one or more ink layers closer to the surface, e.g. a yellow and/or orange layer, may be more opaque than one or more ink layers further from the surface, e.g. a green and/or black layer. Such container may have a surface of plastic, e.g. white plastic.

The viscosity of the ink used may affect how and where ink may leak out. As such, a printing system is provided for which is particularly suitable for use with the ink disclosed herein, and different individual components thereof are also discussed.

A set of inks in accordance with claim 12 for use in a method for applying an image built up of multiple ink layers on a face of a container is envisioned, comprising cyan ink, magenta ink, yellow ink and black ink. In the set of inks, the inks have a different viscosity, preferably in substantially non-overlapping viscosity ranges, and the viscosities may decrease in the order black, cyan, magenta, yellow, or black, green blue/violet, cyan, magenta, orange, yellow. In the set of inks the viscosity of the black ink is higher than the viscosity of the yellow ink. The viscosity of the inks in the set may be included in a range from 1 - 4 Pa.s at 20° for strain rates between approximately 6 and 130 s⁻¹. The relatively dark coloured inks in the ink set are then provided with a higher viscosity then the light coloured inks of the ink set, e.g. the black ink being about 3,5 Pa.s. at 20°, and the viscosities of the Violet/Blue, Cyan, Green, Magenta, Orange and Yellow inks being of stepwise decreasing viscosities with the Yellow ink being about 1,2 Pa.s. at 20°. Lighter coloured inks in the ink set may be more opaque and less viscous than the more viscous, more transparent darker inks in the ink set.

As an option, the set of inks may further comprise at least one of blue ink, violet ink, orange ink, and/or green ink. In this set of inks, the inks may have a different viscosity, preferably in substantially non-overlapping viscosity ranges.

As mentioned, the sequence in which the colours are applied to the printing blanket may be varied. As an alternative to what is discussed above, the viscosities of subsequent inks to be applied to the printing blanket may decrease in the order yellow, magenta, green, optionally violet, black, optionally blue, orange, and cyan, e.g. for printing on a porous surface such as the face of a cardboard cup.

A plate cylinder is provided for use in a flexographic transfer printing system. The plate cylinder comprises a cylinder body providing a mantle surface for receiving a resilient press plate thereon. An indentation may be provided into the cylinder body, at least partially extending under the mantle surface. The indentation provides access to a bottom side of a resilient press plate placed over the mantle surface for peeling the resilient press plate from the plate cylinder, for example using a tool or a finger.

Apart from the plate cylinder, a doctor chamber is provided for use in a flexographic transfer printing system. The doctor chamber may comprise a doctor chamber housing with an ink inlet for receiving ink into the doctor chamber housing, further comprising a wetting window. A set of end seals may be provided at opposite sides of the wetting window, each seal comprising a concave sealing plane. A set of doctor blades may be provided at opposite sides of the wetting window substantially perpendicular to the seals such that the wetting window is defined by the seals and the doctor blades. As an option, the seals are impregnated with a barrier material for the UV curable process colour ink, in particular wax and/or petroleum jelly which may be known under the brand-name Vaseline.

It is preferred to achieve a seal between the doctor chamber and an anilox roll, which anilox roll receives ink from the doctor chamber through the wetting window. The barrier material allows for better sealing, in particular for low viscosity ink.

When the seals comprise a support plane adjacent the concave sealing plane that extends towards the concave sealing plane, side edges of the doctor blades may be embedded in the support plane.

For example, depending on the viscosity of the ink used, the doctor blades may be oriented to provide a contact angle with an anilox roll between 37 and 43 degrees.

As a further aspect, an anilox roll is provided for use in a flexographic transfer printing system. The anilox roll for example comprises a cylindrical anilox roll body with a mantle surface, which mantle surface comprises a plurality of ink wells, and the mantle surface may be bound by smooth circumferential surface rings arranged to cooperate with a concave sealing plane of an end seal of doctor chamber. This particular embodiment of the anilox roll may provide for a better seal with the end seals of the doctor chamber, for example for low viscosity inks.

Also, a flexographic transfer printing system in accordance with claim 14 is provided, which may be used for performing at least part of the steps of the method for applying an image built up of multiple ink layers on a face of a container. The printing system comprises an offset cylinder with a blanket for receiving layers of ink thereon, and a set of colour heads, each comprising an ink reservoir and a doctor chamber, an anilox roll, and a plate cylinder.

The colour heads may be sorted based on the ink therein, in a particular order of colours in a direction of rotation of the offset cylinder, for example in the order yellow, magenta, black and cyan, or the order yellow, magenta, green, optionally violet, black, optionally blue, orange, and cyan. The printing units are sorted based on the viscosity of the ink in their colour heads, for example from high viscosity to low viscosity in a direction of rotation of the offset cylinder. Colour heads may be arranged to be modular, and as such the position of different colour heads may be changed depended on the inks use for printing.

It will be appreciated that embodiments of the printing system are envisioned comprising any combination of the components disclosed herein, and/or any conventional component, in any combination thereof.

The embodiments will be elucidated in conjunction with figures and examples. In the figures:
Figs. 1A and 1B schematically depict a flexographic transfer printing system;
Fig. 1C depicts a schematic perspective view of a printer including the flexographic transfer printing system of Figs. 1A and 1B;
Fig. 2A depicts an embodiment of a doctor chamber;
Fig. 2B depicts an embodiment of an anilox roll;
Fig. 3 shows a detailed view of part of the doctor chamber; and
Fig. 4 depicts an embodiment of a plate cylinder.

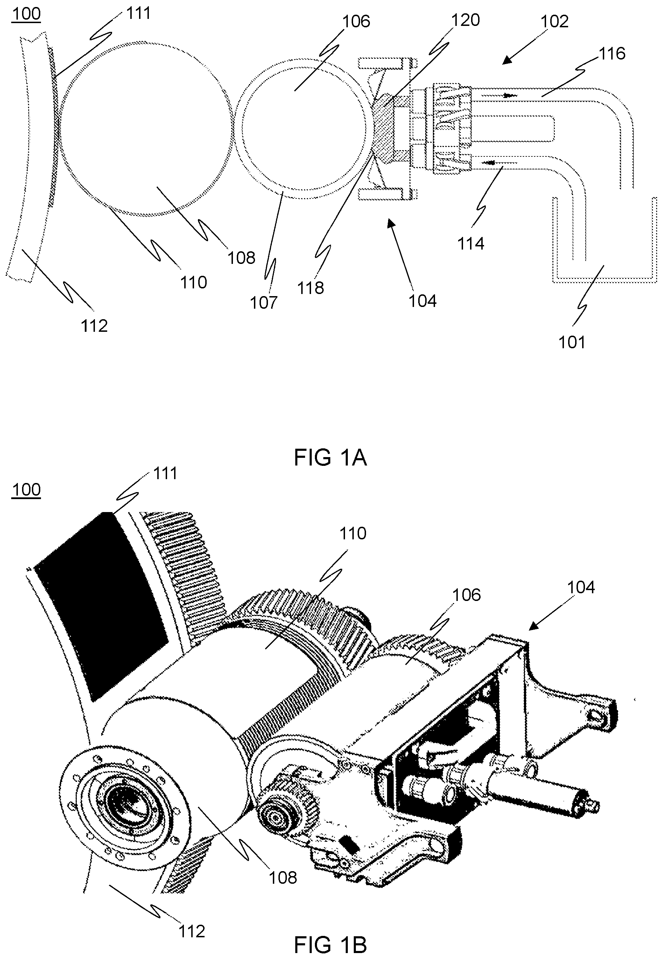

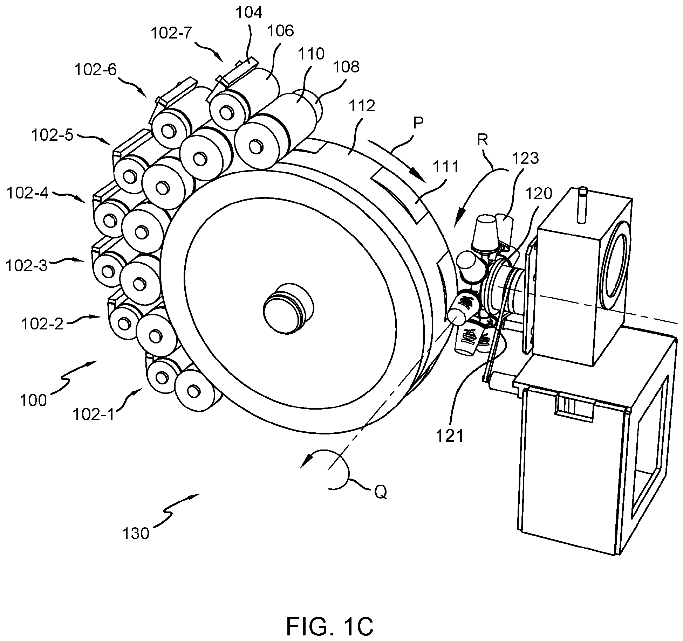

Figs. 1A, 1B and 1C schematically depict a flexographic transfer printing system 100, comprising a colour head 102, and an offset cylinder 112 on which a blanket 111 is provided. The colour head 102 comprises an ink reservoir 101 for holding a volume of ink with a particular viscosity, and a doctor chamber 104. The colour head 102 further comprises an anilox roll 106 and a plate cylinder 108 with a flexographic printing plate 110 positioned on a mantle surface of the plate cylinder 108. As shown in Fig. 1C, the printing system 100 of printer 130 may comprise a plurality of colour heads 102, for example four, seven, eight, or more. In the exemplary embodiment of Fig. 1C, the printer 130 comprises seven colour heads 102 disposed consecutively about a portion of the circumference of the offset cylinder 112. The offset cylinder is arranged to rotate in the direction of arrow P so that blankets 111 that are distributed on the mantle of the offset cylinder 112 travel along the colour heads 102-1 through 102-7.

The colour heads provide for sequential deposition of layers of UV curable process colour inks onto the blanket. As shall be discussed in more detail below, this is done by wet-trapping ink of subsequently deposited UV curable process colour ink layers on previously deposited UV curable process colour ink layers. Via the blanket 111, the layers of ink on the blanket are wet transferred to a substrate to form an image thereon. For example, the substrate may be a face of a container, in particular the face of a plastic or paper cup or other food container. The ink layers forming the image on the substrate may subsequently be cured, in particular using UV light, and may be provided with a coating, e.g. a protective glossy clear coating.

In the exemplary embodiment of Fig. 1C, white plastic cups 123 to be printed are provided on a carrier 120. The carrier 120 is provided with a plurality of radially outwardly extending mandrels 121. Each mandrel 121 can support a cup 123, so that it is freely rotatable about its longitudinal axis as indicated with arrow Q. The carrier 120 may be rotated in the direction of arrow R so that the faces of subsequent cups 123 to be printed may each be arranged to make rolling contact with the blanket, and the layers of ink that have been deposited on the blanket 111 transfer to the face of the cup 123, and the image is transferred to the cup 123. Cups 123 that have received the image may be removed from the mandrel 121 and be replaced by fresh cups to be printed. UV curing and/or coating the image on the cup 123 may be done before, during or after removal of the cup 123 from the mandrel 121. The deposition of the layers of UV curable process colour inks by each colour head 102 includes for each layer the steps of:
- applying UV curable ink of a process colour to ink wells in a mantle surface of an anilox roll 106 by rotating the mantle surface along a wetting window 208 of a doctor chamber 104 containing the UV curable process colour ink,
- transferring UV curable process colour ink from the ink wells in the mantle surface of the anilox roll 106 to a flexographic printing plate 110 carried on a mantle surface of a plate cylinder 108 by contact between the mantle surface of the anilox roll 106 and the printing plate 110, and
- transferring UV curable process colour ink from the printing plate 110 onto a blanket 111 carried on a mantle of a printing cylinder 112.

The UV curable process colour inks are provided as primary colours of a CMYK colour system, the UV curable process colour inks having a different viscosity; and
- the UV curable process colour inks are applied to the blanket in an order of decreasing viscosity.

On the printer 130 the inks are in this example applied to the blanket dark to light in primary colours of an extended gamut colour system, in particular black 102-1, green 102-2, violet 102-3, magenta 102-4, cyan 102-5, orange 102-6 and yellow 102-7.

In the ink set, one or more lighter colour inks include a relatively high amount of non-transparent pigment. The resulting increase in opacity has been accommodated for by positioning more opaque inks (e.g. the yellow and/or orange inks) more towards the bottom of the substrate (i.e. the face of the container to be printed) then more transparent darker inks (e.g. green and/or black inks) superimposed thereon. This way, relatively opaque light coloured inks have been provided in the colour system without blocking relatively transparent darker, relatively transparent other colours.

The relatively dark coloured inks in the ink set have been provided with a higher viscosity then the light coloured inks of the ink set, e.g. the black ink being about 4 Pa.s. at 20°, and the viscosities of the green, violet/blue, magenta, cyan, orange and yellow inks being of stepwise decreasing viscosities with the yellow ink being about 1 Pa.s. at 20°. Lighter inks are more opaque and less viscous than the darker inks, are applied onto the printing blanket after darker inks, and -after transfer from the printing blanket to the substrate- are closer to the face of the container than the darker inks.

Via an ink supply conduit 114, ink from the ink reservoir 101 may be supplied to the doctor chamber 104 for example using a pump. Excess ink may as an option be returned back to the ink reservoir 101 via an ink return conduit 116. Ink may be supplied to the doctor chamber 104 at a particular pressure. A mantle surface 107 of the anilox roll 106 is provided with a plurality of small ink wells which are filled with ink by the doctor chamber 104.

The doctor chamber 104 comprises a set of doctor blades 118. In use, each doctor blade 118 contacts the mantle surface 107 of the anilox roll 106 with a longitudinal edge portion at a particular angle. This angle defines a contact angle with the anilox roll 106, which may for example be between 30-50 degrees, in particular between 35-45 degrees, in particular 37 degrees or 45 degrees. Different doctor blades 118 may have a different contact angle with the anilox roll 106.

The pressure with which the ink is applied to the mantle surface 107 of the anilox roll 106 may be at about ambient pressure, plus any pressure from the weight of an ink column 120 in the doctor chamber 104. Optionally, a smaller overpressure may be applied to the ink, for example an overpressure between 10 - 300 mBar, in particular between 30-200 mBar.

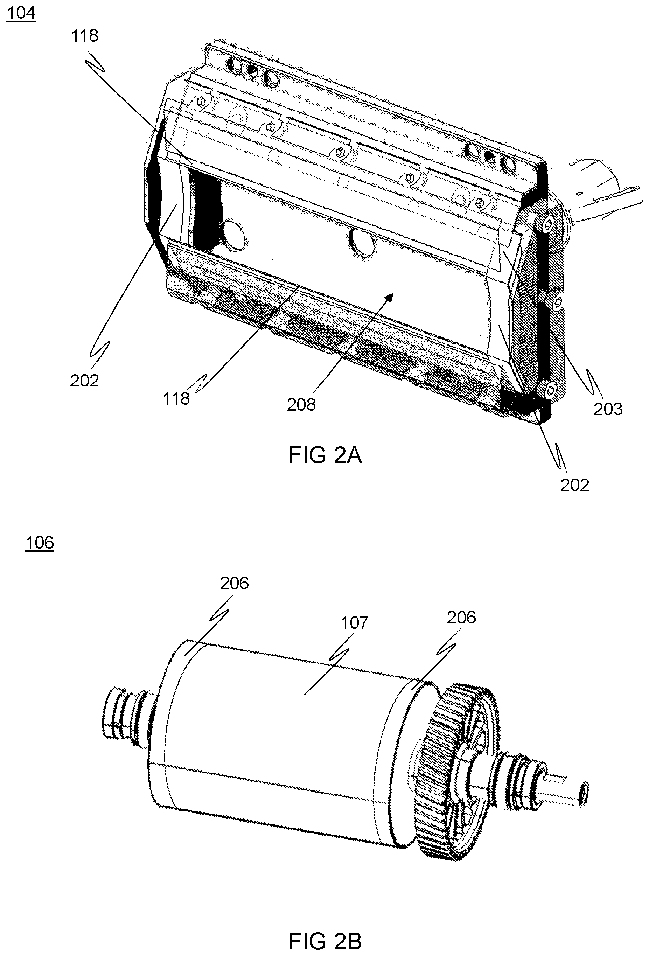

Fig. 2A depicts an embodiment of a doctor chamber 104, and Fig. 2B depicts an anilox roll 106 compatible for use with said doctor chamber 104. On both side ends of the doctor chamber 104, an end seal 202 is provided. In use, the end seals 202 substantially prevent ink from leaking past the anilox roll 106. The seals 202 provide a concave sealing plane, which may cooperate with part of the anilox roll 106 to substantially prevent ink from leaking between the doctor chamber 104 and the anilox roll 106.

In Fig. 2B, an anilox roll 106 is depicted comprising the mantle surface 107 with ink wells, and at two sides adjacent to the mantle surface 107 a smooth circumferential surface ring portion 206. In use, the smooth ring portions 206 cooperate with the seals 202 of the doctor chamber to substantially prevent ink from leaking between the doctor chamber 104 and the anilox roll 106. The smooth ring portions 206 may have a particular surface roughness.

As an option, the seals 202 may comprise and/or be impregnated with a barrier material for ink, in particular for UV curable process colour ink. A seal may for example comprise felt which may be impregnated with the barrier material. The barrier material may for example be wax, polytetrafluorethylene (PTFE), polyurethane (PU), petroleum jelly, any other suitable barrier material or any combination thereof.

As visible in Fig. 2A, as a further option, one or both of the doctor blades 118 extend between the seals 202, and may partially overlap with one or both of the seals 202. The length of the doctor blades 118 may correspond to the axial length of the mantle surface 107 of the anilox roll 106, optionally plus an offset. By virtue of the offset, one or both of the doctor blades 118 may in use also extend at least partially over one or both of the smooth ring portions 206. The offset may for example be 10 mm or more, 20 mm or more, or even 30 mm or more, and may be dependent on the size of the seals 202. The seals 202 and the doctor blades 118 may define a wetting window 208 of the doctor chamber 104.

As an even further option, at least part of one or both of the doctor blades 118 may be embedded in the seal 202, in particular into a support plane 203 adjacent to the concave seal plane. Furthermore, a surface of a doctor blade may lie substantially flush with the support plane 203.

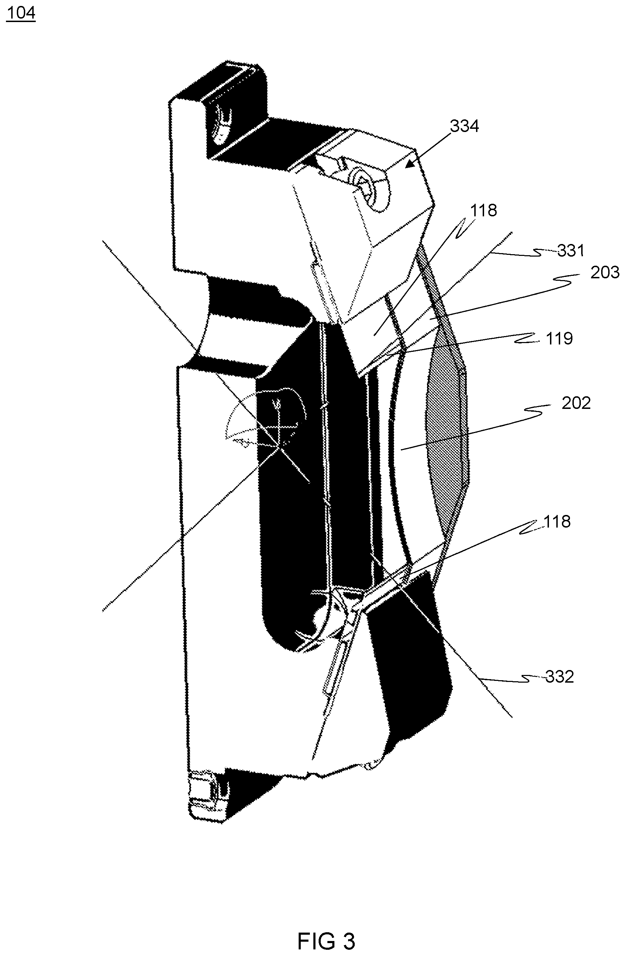

Fig. 3 shows a detailed view of part of the doctor chamber 104, showing the seal 202 with the concave sealing plane, and the two doctor blades 118. The top doctor blade 118 is arranged to establish a first contact angle 331 with an anilox roll, and the bottom doctor blade 118 is arranged to establish a second contact angle 332 with an anilox roll. A blade edge 119 of a doctor blade 118 may be cut at a particular angle to provide a sharp edge. The first contact angle 331 may be substantially equal to the second contact angle 332, or may be smaller or larger.

A doctor blade may for example comprise a metal, plastic, or a combination thereof. A doctor blade 118 may be connected to the doctor chamber 104 using a setting mechanism clamping the doctor blade 118. Using the setting mechanism, an exposed length of the doctor blade 118 may be adjusted.

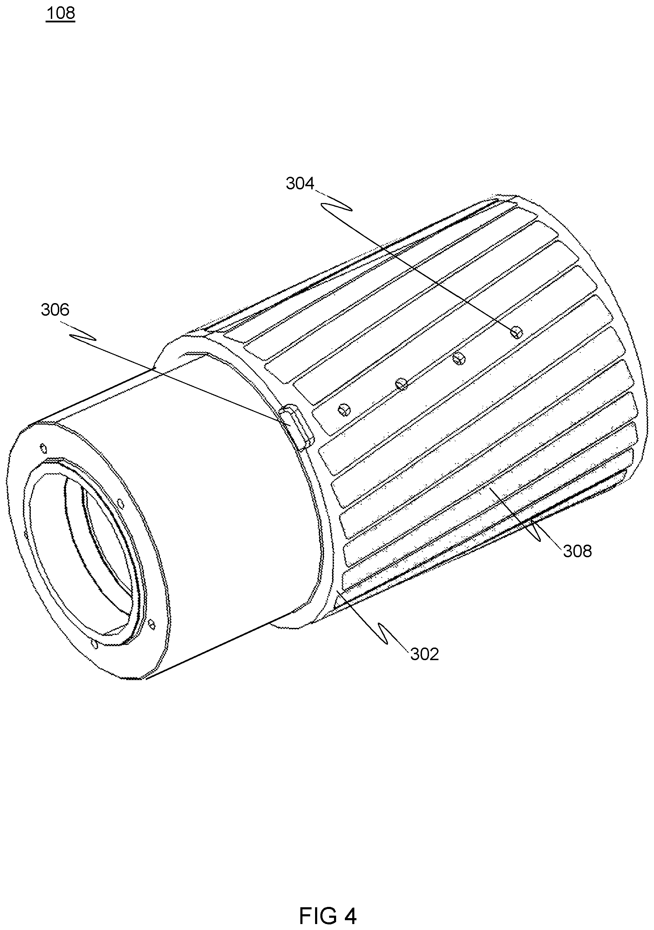

Fig. 4 depicts an embodiment of a plate cylinder 108, with a mantle surface 302 on which a resilient flexographic printing plate may be mounted. For aligning the printing plate with the plate cylinder 108, the plate cylinder 108 as an option comprises one or more holes 304, which may be blind holes. A printing plate may comprise one or more holes with a position and/or spacing corresponding to the position and/or spacing of the holes 304 of the plate cylinders 108. One or more pins may be temporarily pressed through the one or more holes of the printing plate and into the one or more blind holes 304 to align the printing plate with the plate cylinder 108. After the printing plate is properly aligned, the pins may be removed.

At least part of the mantle surface 302 of the plate cylinder 108 may be arranged to form a connection with a printing plate. This connection may be established for example using one or more magnets, glue, adhesive tape, tension straps, ratchets, hooks-and-loops fasteners, any other connection method or any combination thereof. In the particular embodiment of Fig. 4, the mantle surface 302 is partially covered with connection strips 308 arranged for connecting the printing plate to the plate cylinder 108 magnetically.

For removing a printing plate from the plate cylinder 108, as an option, an indentation 306 is provided in the mantle surface 302 of the plate cylinder 108. In use, a printing plate may at least partially overlap the indentation 306. A tool and/or one or more fingers may be at least partially inserted into the indentation 306 and subsequently used to peel away the printing plate from the plate cylinder 108.

The indentation 306 is preferably positioned at an outer edge of the mantle surface 302. A plate cylinder 108 may comprise more than one indentation 306, which may be positioned at one or both outer edges of the mantle surface 302.

In the embodiment shown in Fig. 4, a portion of the cylinder body of the plate cylinder with mantle surface 302 has a larger diameter than an adjacent portion 310. The adjacent portion 310 may for example be used to couple the plate cylinder to a drive for rotating the plate cylinder or a mount for allowing rotation of the plate cylinder. As such, a shoulder 312 may be present in which the indentation 306 may be positioned.

### Comparative example 1

A set of inks with similar viscosities was used for flexographic transfer printing. Unwanted mixing of inks occurred, which resulted in a blurry print. So-called back-trapping occurred, where ink of a first colour is transferred back into the doctor chamber of a second colour. It was observed that blue ink was transferred into the doctor chamber of the yellow ink, which resulted in the undesired effect that the yellow ink became more green by the mixing with the blue ink.

### Example 2

The viscosity of a set of inks of different colours was determined using the guidelines set out in OECD (2012), Test No. 114: Viscosity of Liquids, OECD Guidelines for the Testing of Chemicals, Section 1, OECD Publishing, Paris.

The viscosities were measured using a ProRheo Rheomat R 180 rotational viscometer, which is DIN 53019 certified and was provided with a valid calibration certificate, with a Pt 100 sensor immersed in the measured ink.

Using this test, it can be determined whether the tested ink is a Newtonian fluid or non-Newtonian fluid, and for non-Newtonian fluids, the viscosities at different shear rates can be determined. It was found that the inks are non-Newtonian fluids.

Each of the tested inks is a mix of two ink-types UVAFLEX^{®} FCM Y81 (Y81) and UVACURID^{®} PrimeCup FCM C81 (C81) of the same colour, but with different viscosities. In other examples, other types and brands of inks may be used. By mixing the inks in a specific ratio, a particular viscosity was obtained.

The samples were stored at 20 °C ± 1°C for 24 hours, taking into account that the inks were never stored below 15°C or above 35°C. Before a test specimen was taken, the samples were stirred for 3 minutes until homogeneous. The samples contained no air bubbles while measuring. The samples were introduced in a consistent way, by slowly emptying a syringe, such that the samples contained no air bubbles.

A spindle system, which is DIN 53019 certified, is selected per sample. System 22 and 33 (SYS22, SYS33) are used for the measurements for respectively lower and higher viscosity samples. Furthermore, the sample and the selected spindle system were equilibrated to test temperature. The viscosities were determined as a function of shear rate, at 20 °C and 40 °C, and are shown in Tables 1A, 1B and Tables 2A, 2B, respectively. A shear rate ramp test according to ASTM 'Test Method C - SHEAR RATE RAMP AT DISCRETE TEMPERATURES' is performed. (ASTM D7867-13 'Standard Test Methods for Measurement of the Rotational Viscosity of Paints, Inks and Related Liquid Materials as a Function of Temperature'). Before the measurements were performed, viscosity was stabilized at a low shear rate, comparable to the first shear rate that was measured.

It was observed that some hysteresis occurred. However, the hysteresis was found to be within an acceptable viscosity margin. The viscosity is expressed as a mean value ± a standard deviation.

The measurements were performed five times per ink sample, at similar shear rate ramps. Of the five measurements, per ink sample, a mean value and standard deviation was obtained. The shear rates at which the viscosities were measured, are exemplary for the range of shear rates to which inks are exposed in a typical flexographic printing process.

**Table 1A Viscosity in Pa.s as a function of shear rate @ 20°C**

| Shear rate [s⁻¹] | Yellow SYS33 | Magenta SYS33 | Green SYS33 | Violet SYS22 |
|---|---|---|---|---|
| 6.46 | n/a* | n/a* | n/a* | 2.92±0.11 |
| 9.90 | 4.69±0.43 | 4.33±0.36 | 3.85±0.14 | 2.87±0.07 |
| 15.20 | 4.31±0.35 | 4.22±0.43 | 3.52±0.22 | 2.84±0.06 |
| 23.30 | 4.03±0.21 | 4.24±0.37 | 3.42±0.13 | 2.81±0.05 |
| 35.70 | 3.76±0.13 | 4.23±0.32 | 3.31±0.12 | 2.78±0.04 |
| 54.90 | 3.55±0.08 | 4.27±0.29 | 3.22±0.10 | 2.76±0.04 |
| 84.10 | 3.38±0.05 | 4.31±0.24 | 3.13±0.08 | 2.73±0.03 |
| 129.00 | 3.22±0.02 | 4.33±0.15 | 3.03±0.04 | n/a* |
| 84.10 | 3.17±0.03 | 4.13±0.11 | 3.07±0.05 | 2.71±0.02 |
| 54.90 | 3.18±0.01 | 4.02±0.10 | 3.13±0.05 | 2.72±0.03 |
| 35.70 | 3.27±0.04 | 3.96±0.12 | 3.22±0.03 | 2.75±0.02 |
| 23.30 | 3.38±0.04 | 3.92±0.10 | 3.26±0.05 | 2.76±0.03 |
| 15.20 | 3.52±0.02 | 3.97±0.11 | 3.47±0.08 | 2.79±0.05 |
| 9.90 | 3.83±0.12 | 4.13±0.23 | 3.56±0.09 | 2.82±0.03 |
| 6.46 | n/a* | n/a* | n/a* | 2.86±0.04 |

**Table 1B Viscosity in Pa.s as a function of shear rate @ 20°C**

| Shear rate [s⁻¹] | Key SYS22 | Blue SYS22 | Orange SYS22 | Cyan SYS22 |
|---|---|---|---|---|
| 6.46 | 2.88±0.14 | 2.73±0.12 | 2.59±0.07 | 2.01±0.15 |
| 9.90 | 2.68±0.10 | 2.65±0.13 | 2.58±0.09 | 1.93±0.07 |
| 15.20 | 2.59±0.10 | 2.57±0.09 | 2.55±0.08 | 1.90±0.08 |
| 23.30 | 2.52±0.10 | 2.50±0.07 | 2.53±0.09 | 1.86±0.06 |
| 35.70 | 2.45±0.07 | 2.44±0.04 | 2.51±0.07 | 1.83±0.06 |
| 54.90 | 2.36±0.05 | 2.37±0.03 | 2.48±0.06 | 1.79±0.05 |
| 84.10 | 2.29±0.03 | 2.31±0.01 | 2.45±0.03 | 1.75±0.03 |
| 129.00 | n/a* | n/a* | n/a* | 1.72±0.03 |
| 84.10 | 2.26±0.02 | 2.28±0.004 | 2.42±0.02 | 1.73±0.03 |
| 54.90 | 2.31±0.02 | 2.31±0.01 | 2.43±0.02 | 1.75±0.03 |
| 35.70 | 2.38±0.03 | 2.35±0.01 | 2.44±0.02 | 1.77±0.03 |
| 23.30 | 2.43±0.03 | 2.39±0.02 | 2.45±0.02 | 1.82±0.05 |
| 15.20 | 2.49±0.03 | 2.44±0.02 | 2.48±0.03 | 1.85±0.07 |
| 9.90 | 2.59±0.09 | 2.48±0.03 | 2.50±0.03 | 1.89±0.07 |
| 6.46 | 2.68±0.05 | 2.54±0.06 | 2.51±0.02 | 1.95±0.12 |

**Table 2A Viscosity as a function of shear rate @ 40°C**

| Shear rate [s⁻¹] | Yellow SYS33 | Magenta SYS33 | Green SYS33 | Violet SYS22 |
|---|---|---|---|---|
| 6.46 | n/a* | 0.86±0.23 | n/a* | n/a* |
| 9.90 | n/a* | 0.80±0.17 | n/a* | n/a* |
| 15.20 | n/a* | 0.75±0.12 | n/a* | n/a* |
| 23.30 | 1.58±0.16 | 0.72±0.08 | 0.59±0.03 | 0.65±0.003 |
| 35.70 | 1.37±0.11 | 0.68±0.05 | 0.58±0.02 | 0.64±0.01 |
| 54.90 | 1.18±0.09 | 0.65±0.03 | 0.56±0.02 | 0.63±0.003 |
| 84.10 | 1.02±0.07 | 0.63±0.02 | 0.54±0.01 | 0.62±0.002 |
| 129.00 | 0.88±0.05 | 0.60±0.01 | 0.51±0.004 | 0.61±0.003 |
| 84.10 | 0.93±0.04 | 0.59±0.01 | 0.52±0.005 | 0.61±0.003 |
| 54.90 | 1.03±0.04 | 0.59±0.005 | 0.53±0.005 | 0.62±0.004 |
| 35.70 | 1.15±0.03 | 0.59±0.005 | 0.54±0.01 | 0.63±0.004 |
| 23.30 | n/a* | 0.60±0.004 | 0.56±0.01 | 0.65±0.004 |
| 15.20 | n/a* | 0.61±0.004 | n/a* | n/a* |
| 9.90 | n/a* | 0.64±0.01 | n/a* | n/a* |
| 6.46 | n/a* | 0.67±0.01 | n/a* | n/a* |

**Table 2B Viscosity as a function of shear rate @ 40°C**

| Shear rate [s⁻¹] | Key SYS22 | Blue SYS22 | Orange SYS22 | Cyan SYS22 |
|---|---|---|---|---|
| 6.46 | n/a* | n/a* | n/a* | n/a* |
| 9.90 | n/a* | n/a* | n/a* | n/a* |
| 15.20 | 0.60±0.02 | 0.67±0.03 | 0.57±0.01 | n/a* |
| 23.30 | 0.59±0.01 | 0.65±0.02 | 0.58±0.004 | 0.39±0.01 |
| 35.70 | 0.57±0.02 | 0.62±0.01 | 0.57±0.01 | 0.40±0.01 |
| 54.90 | 0.55±0.01 | 0.59±0.005 | 0.57±0.005 | 0.39±0.003 |
| 84.10 | 0.53±0.004 | 0.56±0.002 | 0.56±0.004 | 0.38±0.004 |
| 129.00 | 0.51±0.001 | 0.54±0.01 | 0.55±0.003 | 0.38±0.005 |
| 84.10 | 0.53±0.001 | 0.55±0.01 | 0.56±0.003 | 0.38±0.01 |
| 54.90 | 1.52±2.19 | 0.56±0.01 | 0.56±0.004 | 0.39±0.01 |
| 35.70 | 0.56±0.004 | 0.58±0.005 | 0.57±0.004 | 0.39±0.005 |
| 23.30 | 0.57±0.01 | 0.59±0.004 | 0.57±0.004 | 0.40±0.02 |
| 15.20 | 0.58±0.005 | 0.60±0.01 | 0.57±0.002 | n/a* |
| 9.90 | n/a* | n/a* | n/a* | n/a* |
| 6.46 | n/a* | n/a* | n/a* | n/a* |

| | | | | |
|---|---|---|---|---|
| *Not available (n/a). For some combinations of samples and shear rates, the viscosity was not determined. For example, for some experiments, the viscosity of the sample exceeded the spindle system viscosity range at given shear rate, due to either a combination of a too high viscosity at a low shear rate or a too low viscosity at a high shear rate. | | | | |

As can be seen from Tables 1 and 2, a set of inks was obtained with substantially non-overlapping viscosity ranges with CMYK colours as well as an extended gamut of CMYKOGV and CMYKOGB. In particular, the viscosity of the inks decreases in the colour sequence YMGVKBOC.

In this particular example, the set of inks contained inks within a viscosity range of approximately 1.7 Pa.s - 5.0 Pa.s at 20°C, and 0.3 Pa.s - 1.6 Pa.s at 40° C for shear rates between approximately 6 s⁻¹ and 130 s⁻¹.

For at least some of the inks it was observed that the viscosity decreased with an increase shear rate, suggesting that at least of some of the inks exhibit shear thinning behaviour.

### Example 3

The inks of example 2 were used for flexographic transfer printing. A first print was made using four colours, in the sequence YMKC. The obtained print was of excellent quality, indicating that no visible mixing or back-trapping occurred between the different inks that were used in the printing.

A second print was made using an extended gamut, in a sequence YMGVKOC. The obtained print was of excellent quality, indicating that no mixing or back-trapping occurred between the different inks that were used in the printing.

A third print was made using an extended gamut, in a sequence YMGKBOC. The obtained print was of excellent quality, indicating that no mixing or back-trapping occurred between the different inks that were used in the printing.

### Example 4

A further set of inks having viscosities as listed in table 3 was prepared along the guidelines set out in Example 2.

**Table 3 Viscosities**

| (at Shear rate 55 [s-1] at 20°C) | | | |
|---|---|---|---|
| YELLOW | 1,3 | | [Pa.s] |
| ORANGE | 1,5 | | [Pa.s] |
| CYAN | 1,8 | | [Pa.s] |
| MAGENTA | 2,6 | | [Pa.s] |
| BLUE | 2,7 | | [Pa.s] |
| VIOLET | 2,7 | | [Pa.s] |
| GREEN | 2,9 | | [Pa.s] |
| KEY | 3,1 | | [Pa.s] |

The inks of example 4 were used for flexographic transfer printing on a white plastic cup with the machine set out in the exemplary embodiment. A first print was made using four colours, in the sequence KMCY. The yellow ink was more opaque than the black ink. The print obtained was of very high quality, indicating that no visible mixing or back-trapping occurred between the different inks that were used in the printing.

A second print was made using an extended gamut, in a sequence KGBMCOY. The yellow and orange inks were more opaque than the black and green inks. The obtained print was of photographic quality, indicating that no mixing or back-trapping occurred between the different inks that were used in the printing.

In the description above, it will be understood that when an element such as layer, region or substrate is referred to as being "on" or "onto" another element, the element is either directly on the other element, or intervening elements may also be present. Also, it will be understood that the values given in the description above, are given by way of example and that other values may be possible and/or may be strived for.

Furthermore, the invention may also be embodied with less components than provided in the embodiments described here, wherein one component carries out multiple functions. Just as well may the invention be embodied using more elements than depicted in the Figures, wherein functions carried out by one component in the embodiment provided are distributed over multiple components.

It is to be noted that the figures are only schematic representations of embodiments of the invention that are given by way of non-limiting examples.

The word 'comprising' does not exclude the presence of other features or steps than those listed in a claim. Furthermore, the words 'a' and 'an' shall not be construed as limited to 'only one', but instead are used to mean 'at least one', and do not exclude a plurality.

## Claims

1. A method for applying an image built up of multiple ink layers on a face of a container, in particular a cup, the method comprising:
- building up the image by sequential deposition of layers of UV curable process colour inks onto a blanket,
- wet-trapping ink of subsequently deposited UV curable process colour ink layers on previously deposited UV curable process colour ink layers,
- transferring the image to the container by a making contact between a face of the container and the blanket,
- UV curing the UV curable process colour inks of the image on the container,
wherein the deposition of the layers of UV curable process colour inks includes for each layer the steps of:
- applying UV curable ink of a process colour to ink wells in a mantle surface of an anilox roll by rotating the mantle surface along a wetting window of a doctor chamber containing the UV curable process colour ink,
- transferring UV curable process colour ink from the ink wells in the mantle surface of the anilox roll to a flexographic printing plate carried on a mantle surface of a plate cylinder by contact between the mantle surface of the anilox roll and the printing plate, and
- transferring UV curable process colour ink from the printing plate onto a blanket carried on a mantle of a printing cylinder;
wherein
- the UV curable process colour inks are provided as primary colours of a CMYK colour system, the UV curable process colour inks having a different viscosity; and
- the UV curable process colour inks are applied to the blanket in an order of decreasing viscosity.

2. Method according to claim 1, wherein the UV curable process colour inks have a different viscosity while being transferred from their respective anilox roll to their respective printing plate, as well as after being deposited on the blanket and prior to being transferred to the container.

3. Method according to claim 1 or 2, wherein the UV curable process colour ink are standard colours according to the Pantone Matching System.

4. Method according to any of claims 1-3, wherein the viscosity of the UV curable ink in the process colours are included in the range 1 - 4 Pa.s at 20° for strain rates between approximately 6 and 130 s⁻¹.

5. Method according to any of the preceding claims, wherein the UV curable process colour inks are provided as primary colours of an CMYK colour system or an extended gamut CMYK colour system (CMYKOGV or CMYKOGB), the UV curable process colour inks having different viscosities, and wherein the colour black (K) is applied to the blanket first, and the colour Yellow (Y) is applied to the blanket last, and/or the UV curable process colour inks are applied to the blanket in a sequence of dark to light, in particular KCMY, KMCY, KG/BCMOY or KGV/BMCOY in decreasing viscosity, preferably stepwise decreasing viscosity.

6. Method according to any of the preceding claims, in which the UV curable process colour ink is applied to the mantle surface of the anilox roll at about ambient pressure plus any height of the ink column in the doctor chamber.

7. Method according to any of the preceding claims, wherein the UV curable process colour ink in the doctor chamber contacting the mantle surface of the anilox roll is bounded by seals that include a concave sealing plane, each sealing plane cooperating with a smooth circumferential surface ring portion of the mantle surface of the anilox roll that bounds a mantle portion having ink wells, optionally, wherein the seals are impregnated with a barrier material for the UV curable process colour ink, in particular wax.

8. Method according to claim 7, wherein the UV curable process colour ink in the doctor chamber contacting the mantle surface of the anilox roll is further bounded by doctor blades extending tangentially towards the mantle surface of the anilox roll, each blade contacting the mantle surface of the anilox roll with a longitudinal edge portion that axially extend along the mantle surface of the anilox roll between the seals.

9. Method according to claim 8, wherein the seals comprise support planes adjacent the concave that extend towards the sealing plane, in which the side edges of the doctor blades are embedded.

10. Method according to claim 8 or 9, wherein the seals and the doctor blade define an outer frame portion of the wetting window of the doctor chamber.

11. Method according to any of claims 8-10 wherein a contact angle between the mantle surface of the anilox roll and the doctor blades is between 37 and 45 degrees.

12. Set of inks for use in a method for applying an image built up of multiple ink layers on a face of a container, for example a method according to claim 1, comprising:
- cyan ink;
- magenta ink;
- yellow ink; and
- black ink,
wherein the inks have a different viscosity, preferably in substantially non-overlapping viscosity ranges, and wherein
the viscosity of the black ink is higher than the viscosity of the yellow ink,
the viscosities preferably decreasing in the order dark to light, in particular black, cyan, magenta, yellow or black, magenta, cyan, yellow.

13. Set of inks according to claim 12, further comprising:
- at least one of blue ink and violet ink;
- orange ink; and
- green ink;
wherein the inks have a different viscosity, preferably in substantially non-overlapping viscosity ranges, and wherein the viscosities decrease in the order black, green, blue/violet, cyan, magenta, orange, yellow or black, green, blue/violet, magenta, cyan, orange, yellow, optionally, wherein the inks have a viscosity included in a range extending from 1.0 - 4.0 Pa.s at 20° for strain rates between approximately 6 and 130 s⁻¹.

14. Flexographic transfer printing system, comprising:
- an offset cylinder with a blanket for receiving layers of ink thereon;
- a set of colour heads, each comprising:
- an ink reservoir and a doctor chamber;
- an anilox roll;
- a plate cylinder;
wherein the printing units are sorted based on the viscosity of the ink in their colour heads, from high viscosity to low viscosity in a direction of rotation of the offset cylinder.

15. Printing system according to claim 14, wherein the printing system is suitable for applying an image built up of multiple ink layers on a face of a container.

## Patentansprüche

1. Verfahren zum Auftragen eines aus mehreren Farbschichten aufgebauten Bildes auf eine Fläche eines Behälters, insbesondere eines Bechers, wobei das Verfahren Folgendes umfasst:
- Aufbau des Bildes durch aufeinanderfolgende Schichten von UV-härtbaren Prozessfarben auf einem Drucktuch,
- Nass-Trapping von Druckfarbe nachfolgend aufgebrachter UV-härtbarer Prozessfarbschichten auf zuvor aufgebrachten UV-härtbaren Prozessfarbschichten,
- Übertragung des Bildes auf den Behälter durch Herstellung eines Kontakts zwischen einer Fläche des Behälters und dem Drucktuch,
- UV-Härtung der UV-härtbaren Prozessfarben des Bildes auf dem Behälter,
wobei das Aufbringen der Schichten aus UV-härtbaren Prozessfarben für jede Schicht die folgenden Schritte umfasst:
- Auftragen von UV-härtbarer Druckfarbe einer Prozessfarbe auf Farbbecken in einer Mantelfläche einer Farbübertragwalze durch Drehen der Mantelfläche entlang eines Benetzungsfensters einer Rakelkammer, welche die UV-härtbare Prozessfarbe enthält,
- Übertragung von UV-härtbarer Prozessfarbe aus den Farbbecken in der Mantelfläche der Farbübertragwalze auf eine Flexodruckplatte, die auf einer Mantelfläche eines Plattenzylinders getragen wird, durch Kontakt zwischen der Mantelfläche der Farbübertragwalze und der Druckplatte, und
- Übertragung von UV-härtbarer Prozessfarbe von der Druckplatte auf ein Drucktuch, das auf einem Mantel eines Druckzylinders getragen wird;
wobei
- die UV-härtbaren Prozessfarben als Primärfarben eines CMYK-Farbsystems bereitgestellt werden, wobei die UV-härtbaren Prozessfarben eine unterschiedliche Viskosität aufweisen; und
- die UV-härtbaren Prozessfarben in der Reihenfolge abnehmender Viskosität auf das Drucktuch aufgetragen werden.

2. Verfahren nach Anspruch 1, wobei die UV-härtbaren Prozessfarben eine unterschiedliche Viskosität aufweisen, während sie von ihrer jeweiligen Farbübertragwalze auf ihre jeweilige Druckplatte übertragen werden, sowie nach dem Aufbringen auf dem Drucktuch und vor der Übertragung auf den Behälter.

3. Verfahren nach Anspruch 1 oder 2, wobei die UV-härtbaren Prozessfarben Standardfarben gemäß dem Pantone-Matching-System sind.

4. Verfahren nach einem der Ansprüche 1 bis 3, wobei die Viskosität der UV-härtbaren Druckfarbe in den Prozessfarben im Bereich von 1 bis 4 Pa.s bei 20° für Dehnungsgeschwindigkeiten zwischen etwa 6 und 130 s⁻¹ liegt.

5. Verfahren nach einem der vorhergehenden Ansprüche, wobei die UV-härtbaren Prozessfarben als Primärfarben eines CMYK-Farbsystems oder eines CMYK-Farbsystems mit erweitertem Farbumfang (CMYKOGV oder CMYKOGB) bereitgestellt werden, wobei die UV-härtbaren Prozessfarben unterschiedliche Viskositäten aufweisen, und wobei die Farbe Schwarz (K) zuerst und die Farbe Gelb (Y) zuletzt auf das Drucktuch aufgebracht wird und/oder die UV-härtbaren Prozessfarben in einer Reihenfolge von dunkel nach hell, insbesondere KCMY, KMCY, KG/BCMOY oder KGV/BMCOY in abnehmender Viskosität, vorzugsweise stufenweise abnehmender Viskosität, auf das Drucktuch aufgebracht werden.

6. Verfahren nach einem der vorhergehenden Ansprüche, bei dem die UV-härtbare Prozessfarbe bei etwa Umgebungsdruck zuzüglich einer beliebigen Höhe der Farbsäule in der Rakelkammer auf die Mantelfläche der Farbübertragwalze aufgebracht wird.

7. Verfahren nach einem der vorhergehenden Ansprüche, wobei die UV-härtbare Prozessfarbe in der Rakelkammer, die mit der Mantelfläche der Farbübertragwalze in Kontakt steht, durch Dichtungen begrenzt wird, die eine konkave Dichtungsebene umfassen, wobei jede Dichtungsebene mit einem glatten Umfangsflächenringabschnitt der Mantelfläche der Farbübertragwalze zusammenwirkt, der einen Mantelabschnitt mit Farbbecken begrenzt, wobei die Dichtungen gegebenenfalls mit einem Barrierematerial für die UV-härtbare Prozessfarbe, insbesondere Wachs, imprägniert sind.

8. Verfahren nach Anspruch 7, wobei die UV-härtbare Prozessfarbe in der Rakelkammer, die mit der Mantelfläche der Farbübertragwalze in Kontakt steht, ferner durch Rakelklingen begrenzt ist, die sich tangential zur Mantelfläche der Farbübertragwalze erstrecken, wobei jede Klinge die Mantelfläche der Farbübertragwalze mit einem Längskantenabschnitt berührt, der sich axial entlang der Mantelfläche der Farbübertragwalze zwischen den Dichtungen erstreckt.

9. Verfahren nach Anspruch 8, wobei die Dichtungen an die konkave Ebene angrenzende, sich zur Dichtungsebene hin erstreckende Stützebenen aufweisen, in welche die Seitenkanten der Rakelklingen eingebettet sind.

10. Verfahren nach Anspruch 8 oder 9, wobei die Dichtungen und die Rakelklinge einen äußeren Rahmenabschnitt des Benetzungsfensters der Rakelkammer definieren.

11. Verfahren nach einem der Ansprüche 8 bis 10, wobei der Kontaktwinkel zwischen der Mantelfläche der Farbübertragwalze und den Rakelklingen zwischen 37 und 45 Grad beträgt.

12. Farbsatz zur Verwendung in einem Verfahren zum Aufbringen eines aus mehreren Farbschichten aufgebauten Bildes auf eine Fläche eines Behälters, zum Beispiel ein Verfahren nach Anspruch 1, welcher Folgendes umfasst:
- Cyan-Druckfarbe;
- Magenta-Druckfarbe;
- Gelb-Druckfarbe; und
- Schwarz-Druckfarbe,
wobei die Farben eine unterschiedliche Viskosität aufweisen, vorzugsweise in sich im Wesentlichen nicht überschneidenden Viskositätsbereichen, und wobei die Viskosität der Schwarz-Druckfarbe höher ist als die Viskosität der Gelb-Druckfarbe, wobei die Viskositäten vorzugsweise in der Reihenfolge von dunkel nach hell abnehmen, insbesondere Schwarz, Cyan, Magenta, Gelb oder Schwarz, Magenta, Cyan, Gelb.

13. Farbsatz nach Anspruch 12, der ferner Folgendes umfasst:
- mindestens eine blaue oder violette Druckfarbe;
- orangene Druckfarbe; und
- grüne Druckfarbe;
wobei die Druckfarben eine unterschiedliche Viskosität aufweisen, vorzugsweise in sich im Wesentlichen nicht überschneidenden Viskositätsbereichen, und wobei die Viskositäten in der Reihenfolge Schwarz, Grün, Blau/Violett, Cyan, Magenta, Orange, Gelb oder Schwarz, Grün, Blau/Violett, Magenta, Cyan, Orange, Gelb abnehmen, wobei die Druckfarben gegebenenfalls eine Viskosität aufweisen, die in einem Bereich von 1,0 bis 4,0 Pa.s bei 20° für Dehnungsgeschwindigkeiten zwischen etwa 6 und 130 s⁻¹ liegt.

14. Flexographisches Transferdrucksystem, das Folgendes umfasst:
einen Offset-Zylinder mit einem Drucktuch zur Aufnahme von Farbschichten darauf;
eine Reihe von Farbköpfen, die jeweils Folgendes umfassen:
- - ein Farbreservoir und eine Rakelkammer;
- - eine Farbübertragwalze;
- - einen Plattenzylinder;
wobei die Druckeinheiten auf der Grundlage der Viskosität der Druckfarbe in ihren Farbköpfen von hoher Viskosität zu niedriger Viskosität in einer Drehrichtung des Offset-Zylinders sortiert werden.

15. Drucksystem nach Anspruch 14, wobei das Drucksystem geeignet ist, ein aus mehreren Farbschichten aufgebautes Bild auf eine Fläche eines Behälters aufzubringen.

## Revendications

1. Procédé d'application d'une image constituée de multiples couches d'encre sur une face d'un récipient, en particulier un gobelet, le procédé comprenant :
- la création de l'image par dépôt successif de couches d'encres de couleur de procédé à séchage par ultraviolets sur une ébauche,
- la prise humide de l'encre des couches d'encre de couleur à séchage par ultraviolets déposées par la suite sur les couches d'encre de couleur à séchage par ultraviolets déposées auparavant,
- le transfert de l'image vers le récipient en créant un contact entre une face du récipient et l'ébauche,
- le séchage par ultraviolets des encres de couleur de procédé à séchage par ultraviolets de l'image sur le récipient,
dans lequel le dépôt des couches d'encres de couleur de procédé à séchage par ultraviolets comprend, pour chaque couche, les étapes consistant à :
- appliquer une encre à séchage par ultraviolets d'une couleur précise sur des encriers sur une surface supérieure d'un rouleau anilox en faisant tourner la surface supérieure le long d'une fenêtre d'humidification d'une chambre de racles contenant l'encre de couleur de procédé à séchage par ultraviolets,
- transférer l'encre de couleur de procédé à séchage par ultraviolets des encriers situés sur la surface supérieure du rouleau anilox vers une plaque d'impression flexographique portée sur une surface supérieure d'un cylindre de plaque par contact entre la surface supérieure du rouleau anilox et la plaque d'impression, et
- transférer l'encre de couleur de procédé à séchage par ultraviolets de la plaque d'impression vers une ébauche portée sur une surface supérieure d'un cylindre d'impression ;
dans lequel
- les encres de couleur de procédé à séchage par ultraviolets sont prévues comme des couleurs primaires d'un système de couleurs CMJN, les encres de couleur de procédé à séchage par ultraviolets ayant une viscosité différente ; et
- les encres de couleur de procédé à séchage par ultraviolets sont appliquées sur l'ébauche par ordre de viscosité décroissante.

2. Procédé selon la revendication 1, dans lequel les encres de couleur de procédé à séchage par ultraviolets présentent une viscosité différente pendant qu'elles sont transférées de leur rouleau anilox respectif vers leur plaque d'impression respective, et après avoir été déposées sur l'ébauche et avant d'être transférées vers le récipient.

3. Procédé selon la revendication 1 ou 2, dans lequel les encres de couleur de procédé à séchage par ultraviolets sont des couleurs standard selon le nuancier Pantone.

4. Procédé selon l'une quelconque des revendications 1 à 3, dans lequel la viscosité des encres à séchage par ultraviolets dans les couleurs de procédé est comprise entre 1 et 4 Pa.s à 20° pour des vitesses de déformation comprises entre environ 6 et 130 s⁻¹.

5. Procédé selon l'une quelconque des revendications précédentes, dans lequel les encres de couleur de procédé à séchage par ultraviolets sont prévues comme des couleurs primaires d'un système de couleurs CMJN ou d'un système de couleurs CMJN à gamme étendue (CMYKOGV ou CMYKOGB), les encres de couleur de procédé à séchage par ultraviolets ayant différentes viscosités, et dans lequel la couleur noire (K) est appliquée sur l'ébauche en premier, et la couleur jaune (Y) est appliquée sur l'ébauche en dernier, et/ou les encres de couleur de procédé à séchage par ultraviolets sont appliquées sur l'ébauche dans un ordre de foncé à clair, en particulier KCMY, KMCY, KG/BCMOY ou KGV/BMCOY par viscosité décroissante, de préférence par viscosité décroissante progressive.

6. Procédé selon l'une quelconque des revendications précédentes, dans lequel l'encre de couleur de procédé à séchage par ultraviolets est appliquée sur la surface supérieure du rouleau anilox à une pression quasi ambiante plus n'importe quelle hauteur de la colonne d'encre dans la chambre de racles.

7. Procédé selon l'une quelconque des revendications précédentes, dans lequel l'encre de couleur de procédé à séchage par ultraviolets dans la chambre de racles en contact avec la surface supérieure du rouleau anilox est délimitée par des joints qui comportent un plan d'étanchéité concave, chaque plan d'étanchéité coopérant avec une partie annulaire de surface circonférentielle lisse de la surface supérieure du rouleau anilox qui délimite une partie de surface supérieure ayant des encriers, dans lequel, éventuellement, les joints sont imprégnés avec un matériau barrière pour l'encre de couleur de procédé à séchage par ultraviolets, en particulier de la cire.

8. Procédé selon la revendication 7, dans lequel l'encre de couleur de procédé à séchage par ultraviolets dans la chambre de racles en contact avec la surface supérieure du rouleau anilox est en outre délimitée par des racles qui s'étendent de manière tangentielle vers la surface supérieure du rouleau anilox, chaque racle étant en contact avec la surface supérieure du rouleau anilox, avec une partie de bord longitudinal qui s'étend axialement le long de la surface supérieure du rouleau anilox entre les joints.

9. Procédé selon la revendication 8, dans lequel les joints comprennent des plans de support adjacents au plan d'étanchéité concave qui s'étendent vers le plan d'étanchéité, auxquels les bords latéraux des racles sont intégrés.

10. Procédé selon la revendication 8 ou 9, dans lequel les joints et les racles définissent une partie d'armature externe de la fenêtre d'humidification de la chambre de racles.

11. Procédé selon l'une quelconque des revendications 8 à 10, dans lequel un angle de contact entre la surface supérieure du rouleau anilox et les racles est compris entre 37 et 45 degrés.

12. Jeu d'encres à utiliser avec un procédé d'application d'une image constituée de multiples couches d'encre sur une face d'un récipient, comme un procédé selon la revendication 1, comprenant :
- de l'encre cyan ;
- de l'encre magenta ;
- de l'encre jaune ; et
- de l'encre noire,
dans lequel les encres présentent une viscosité différente, de préférence sur des plages de viscosité qui ne se chevauchent sensiblement pas, et dans lequel
la viscosité de l'encre noire est supérieure à la viscosité de l'encre jaune,
les viscosités diminuant progressivement du foncé vers le clair, en particulier noir, cyan, magenta, jaune ou noir, magenta, cyan, jaune.

13. Jeu d'encres selon la revendication 12, comprenant en outre :
- au moins l'une d'une encre bleue et d'une encre violette ;
- une encre orange ; et
- une encre verte ;
dans lequel les encres présentent une viscosité différente, de préférence sur des plages de viscosité qui ne se chevauchent sensiblement pas, et dans lequel les viscosités diminuent dans l'ordre noir, vert, bleu/violet, cyan, magenta, orange, jaune ou noir, vert, bleu/violet, magenta, cyan, orange, jaune, dans lequel, éventuellement, les encres présentent une viscosité comprise entre 1 et 4 Pa.s à 20° pour des vitesses de déformation comprises entre environ 6 et 130 s⁻¹.

14. Système d'impression par transfert flexographique, comprenant :
- un cylindre d'offset avec une ébauche destinée à recevoir des couches d'encre ;
- un jeu de têtes couleur, comprenant chacune :
- un réservoir d'encre et une chambre de racles ;
- un rouleau anilox ;
- un cylindre de plaque ;
dans lequel les unités d'impression sont triées sur la base de la viscosité de l'encre dans leurs têtes couleur, d'une viscosité élevée à une viscosité faible dans un sens de rotation du cylindre d'offset.

15. Système d'impression selon la revendication 14, dans lequel le système d'impression est adapté pour appliquer une image constituée de multiples couches d'encre sur une face d'un récipient.
